Europäisches Patentamt

European Patent Office

Office européen des brevets

(11) Numéro de publication: **0 015 524**
**B1**

(12) **FASCICULE DE BREVET EUROPEEN**

(45) Date de publication du fascicule du brevet: **23.10.85**

(51) Int. Cl.⁴: **H 04 Q 11/04, H 04 Q 3/54**

(21) Numéro de dépôt: **80101045.5**

(22) Date de dépôt: **03.03.80**

(54) Autocommutateur à réseau de connexion numérique.

(30) Priorité: **08.03.79 FR 7905971**

(43) Date de publication de la demande:
**17.09.80 Bulletin 80/19**

(45) Mention de la délivrance du brevet:
**23.10.85 Bulletin 85/43**

(84) Etats contractants désignés:
**BE CH DE FR GB IT NL SE**

(56) Documents cités:
**EP-A-0 006 132**
**EP-A-0 008 065**
**EP-A-0 008 066**
**EP-A-0 008 067**
**DE-A-2 748 580**
**FR-A-2 353 193**
**GB-A-2 016 867**
**US-A-3 912 873**

**IEEE TRANSACTIONS ON COMMUNICATION
TECHNOLOGY, volume COM-16, no. 6,
décembre 1968, New York, US, GALLAGHER:
"A digital PCM time-division switching
system", pages 759-770**

(73) Titulaire: **COMPAGNIE INDUSTRIELLE DES
TELECOMMUNICATIONS CIT-ALCATEL S.A.
dite:
12, rue de la Baume
F-75008 Paris (FR)**

(72) Inventeur: **Deglin, René
3 Allée du Roussillon
F-78140 Velizy-Villacoublay (FR)**

(74) Mandataire: **Weinmiller, Jürgen et al
Zeppelinstrasse 63
D-8000 München 80 (DE)**

(56) References cited:
**PATENTS ABSTRACTS OF JAPAN, vol. 2, no.
118, 30 septembre 1978, page 6841 E 78
BULLETIN DE L'ASSOCIATION SUISSE DES
ELECTRICIENS vol. 67, no. 18, septembre 1976,
Zürich, CH, O. WAAS: "Periphere Prozessoren
im Integrierten Fernmeldesystem IFS-1", pages
969-973
TELCOM REPORT, vol. 2, no. 3, juin 1979,
München, DE, SUCKFULL: "Architektur einer
neuen Linie digitaler öffentlicher
Fernsprechvermittlungen", pages 174-183**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

ELECTRICAL COMMUNICATION, vol. 54, no. 3, 1979, Londres, GB, ECKARDT et al.: "ITT 1230 digital exchange. Architecture of a small to medium size digital exchange", pages 193-198
ELECTRICAL COMMUNICATION, vol. 54, no. 3, 1979, Londres, GB, LANGENBACH-BELZ: "ITT 1230 digital exchange. Small local exchanges using digital techniques", pages 186-192
COMMUNICATION AND TRANSMISSION vol. 1, no. 1, septembre 1979, Paris, FR, VIARD et al.: "La nouvelle gamme de centraux temporels de citalcatel", pages 87-102

# 0 015 524

**Description**

L'invention concerne un autocommutateur à réseau de connexion numérique qui relie des circuits ou des lignes d'abonnés par l'intermédiaire de canaux numériques de liaisons à multiplexage temporel, des unités périphériques d'émission et de réception de signalisation pour lesdits circuits ou lignes d'abonnés, des unités périphériques de marquage du réseau de connexion numérique et au moins un calculateur central de commande pilotant les unités périphériques via une logique de couplage dotée d'au moins un processeur et reliée au réseau de connexion par des canaux numériques de liaisons à multiplexage temporel de même que les circuits, les lignes d'abonnés et les unités périphériques.

On connait, par exemple à partir d'un article paru dans le Bulletin de l'Association Suisse des Electriciens, Vol. 67, No. 18, sept. 1976, p. 969 à 973, un autocommutateur comportant un réseau de connexion numérique qui relie des circuits ou des lignes d'abonnés par l'intermédiaire de canaux numériques de liaison à multiplexage temporel. Cet autocommutateur comporte en outre des unités périphériques d'émission et de réception de signalisation pour ces circuits ou lignes et une unité de gestion des messages entre ces unités et un processeur central.

On connait en outre des autocommutateurs téléphoniques à réseau de connexion temporel permettant la commutation de voies téléphoniques supportées par des liaisons multiplexées, par exemple des liaisons utilisant la modulation par impulsion et codage connue sous le nom de MIC (ou PCM dans les pays anglo-saxons). La signalisation est portée par des voies déterminées des liaisons MIC, et elle est extraite et injectée par des unités périphériques reliées au calculateur central.

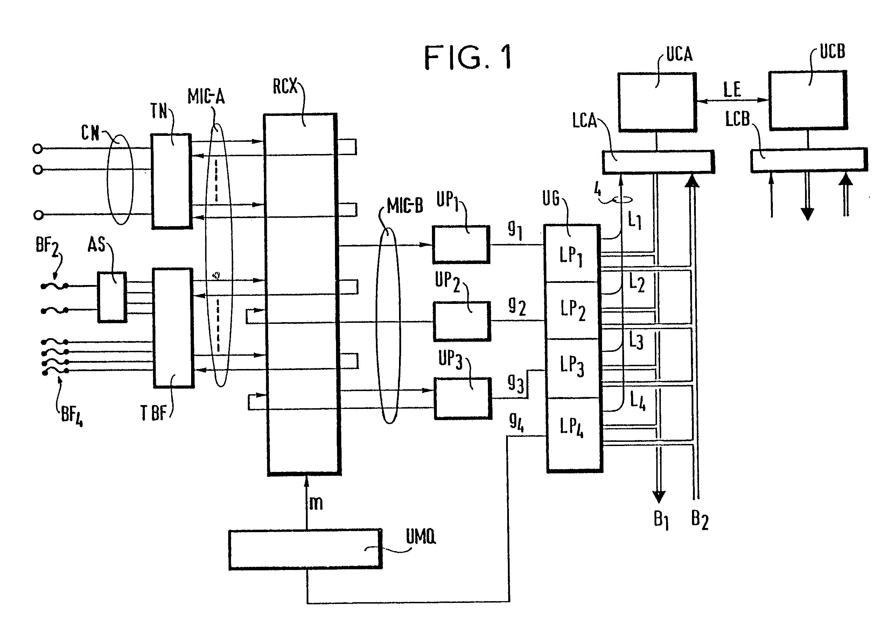

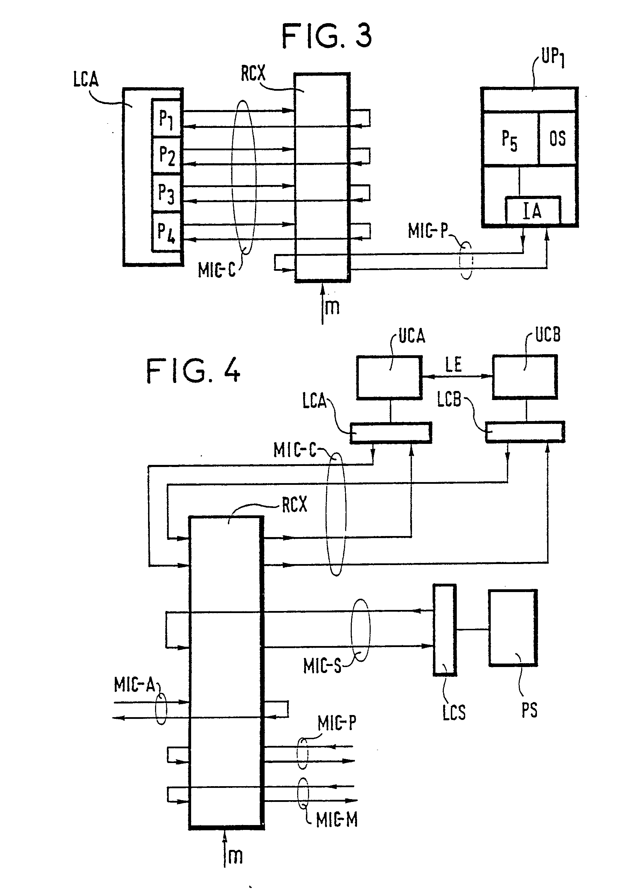

Le réseau de connexion est commandé par le calculateur par l'intermédiaire d'une unité périphérique de marquage. En ce qui concerne l'injection et l'extraction de la signalisation, l'apparition des réseaux de connexion numériques a rendu économique l'utilisation du réseau de connexion lui-même et la suppression des explorateurs et distributeurs qui réalisaient ces fonctions au niveau des équipements de lignes ou d'un étage de présélection. Les voies temporelles de signalisation des liaisons MIC entrantes et sortantes sont commutées sur des liaisons MIC affectées aux unités périphériques. Des réalisations de ce type sont décrites dans la revue "Commutation et Electronique" No. 56 de Janvier 1977, p. 39 à 43, notamment figure 1, et No. 59 d'Octobre 1977, p. 35, 36 et figure 4.

Ce type de structure conserve un inconvénient: le coût de la liaison des unités périphériques au calculateur. En effet, pour conserver les avantages de la commande centralisée, on peut utiliser des unités périphériques qui n'effectuent aucune analyse de la signalisation, mais qui gèrent des évènements élémentaires tels que fronts d'impulsions et changements d'état. Dans ce cas le débit des messages entre ces unités et le calculateur est très élevé et la gestion de ces messages nécessite des moyens importants. Un exemple de liaisons entre unités périphériques et calculateurs est décrit dans le brevet français No. 2.346.930 du 31 Mars 1976 de la demanderesse. Ce type de liaison nécessite des moyens logiques de gestion à chaque extrémité (coupleurs de modules CM et logique de concentration LC). D'autre part le coût de telles liaisons peut augmenter fortement avec la longueur.

L'invention se propose de remédier à ces inconvénients par une utilisation plus importante de canaux d'échanges MIC commutés par le réseau de connexion.

Ce but est atteint par l'autocommutateur tel qu'il est caractérisé dans la revendication 1.

L'invention sera décrite ci-après plus en détail à l'aide d'un mode de réalisation donné à titre d'exemple et des figures annexées.

La figure 1 représente un diagramme d'un autocommutateur téléphonique de type connu auquel s'applique le mode de réalisation de l'invention décrit ci-après.

La figure 2 représente un diagramme d'un autocommutateur suivant l'invention.

La figure 3 représente un diagramme des organes de liaison entre calculateur central et unités périphériques.

La figure 4 représente un diagramme d'un autocommutateur comportant des processeurs de signalisation.

Le mode de réalisation décrit concerne un autocommutateur téléphonique de transit à réseau de connexion temporel. Un autocommutateur de ce type réalisé suivant l'art antérieur est représenté à la figure 1. Il comporte un calculateur de commande qui est doublé (UCA, UCB) pour des raisons de sécurité. Les deux calculateurs UCA, UCB sont reliés par une liaison LE et travaillent par exemple en partage de charge. Les circuits raccordés au central téléphonique peuvent être de type numérique CN ou basse fréquence à deux fils BF2 ou à quatre fils BF4. Des liaisons de type MIC raccordées à un réseau de connexion RCX sont des liaisons MIC à la norme européenne. Pour mémoire, il s'agit de multiplex à 32 voies échantillonnées à la fréquence de 8 kHz, chaque voie étant codée sur 8 éléments binaires. Les trames sont organisées en multitrames de 16 trames. La signalisation est portée par les voies numéro 16 des trames, la trame de numéro i portant la signalisation des voies i et i+16 codées chacune sur 4 des éléments binaires de la voie. Un signal de verrouillage de trame est porté par la voie 0 des trames paires, un signal de verrouillage de multitrames est porté par la voie 16 de la trame 0. La signalisation peut également être portée par des liaisons MIC indépendantes appelées canal sémaphore. Les liaisons MIC d'accès des circuits au réseau de connexion RCX sont appelées MIC-A sur la figure 1. Les circuits numériques CN sont reliés à des liaisons MIC-A par un terminal numérique TN effectuant la remise en forme des signaux. Les circuits basse fréquence 4 fils BF4 sont reliés à un terminal TBF qui effectue pour les circuits entrants un

3

**0 015 524**

filtrage et un échantillonnage des signaux basse fréquence, suivi d'un codage numérique. Le circuit TBF effectue également le codage numérique de la signalisation et son injection dans les voies numéro 16 des trames numériques. Pour les circuits sortants, le terminal TBF effectue les fonctions inverses. Les circuits basse fréquence à 2 fils BF2 sont reliés au terminal TBF par l'intermédiaire d'un adaptateur de signalisation AS qui effectue une conversion 2 fils 4 fils. Les unités périphériques comportent des unités de signalisation UP1 à UP3, et une unité de marquage UMQ. L'unité de marquage est reliée au réseau de connexion par une liaison de commande m. Les unités périphériques UP1 à UP3 sont reliées au réseau de connexion par des liaisons MIC appelées MIC-B. Les unités UP1 comporteront par exemple des émetteurs et des récepteurs de numérotation décimale. Les unités UP2 comporteront par exemple des émetteurs et des récepteurs de numérotation multifréquences, les unités UP3 pourront être des unités de traitement de la signalisation par canal sémaphore. Les calculateurs UCA, UCB contrôlent toutes les opérations d'exploitation, de maintenance, et la commande de l'unité de signalisation et du réseau de connexion. L'invention ne concerne que ces deux dernières fonctions. Pour celles-ci, l'accès au calculateur est effectué par des logiques de couplage LCA, LCB qui sont des logiques programmées permettant la gestion d'unités périphériques. La gestion des messages échangés avec le calculateur au niveau des unités périphériques, est faite par une unité de gestion UG comportant par exemple 4 unités logiques programmées LP1 à LP4 affectées aux unités UP1 à UP3 et UMQ. Les logiques LP1 à LP4 peuvent être de même type et comporter des programmes spécifiques. Les liaisons g1 à g4 entre les unités périphériques et les logiques LP1 à LP4 comportent une liaison pour chaque organe de chaque type, par exemple pour les organes de l'unité UP1, une liaison pour chaque récepteur décimal et une liaison pour chaque émetteur. Les liaisons entre les logiques LP1 à LP4 et les logiques de couplage LCA, LCB comportent par exemple des liaisons individuelles de commande L1 à L4 et des bus B1 et B2 pour l'échange des messages entrants et sortants.

Les connexions effectuées entre les liaisons MIC-A et les liaisons MIC-B pour l'émission ou la réception de la signalisation peuvent être permanentes ou à la demande. Par exemple pour la signalisation décimale on pourrait effectuer des liaisons permanentes, une liaison MIC-B pouvant supporter la signalisation sur 31 voies connectées en permanence aux voies numéro 16 de 31 liaisons MIC-A c'est-à-dire la signalisation de 930 circuits téléphoniques.

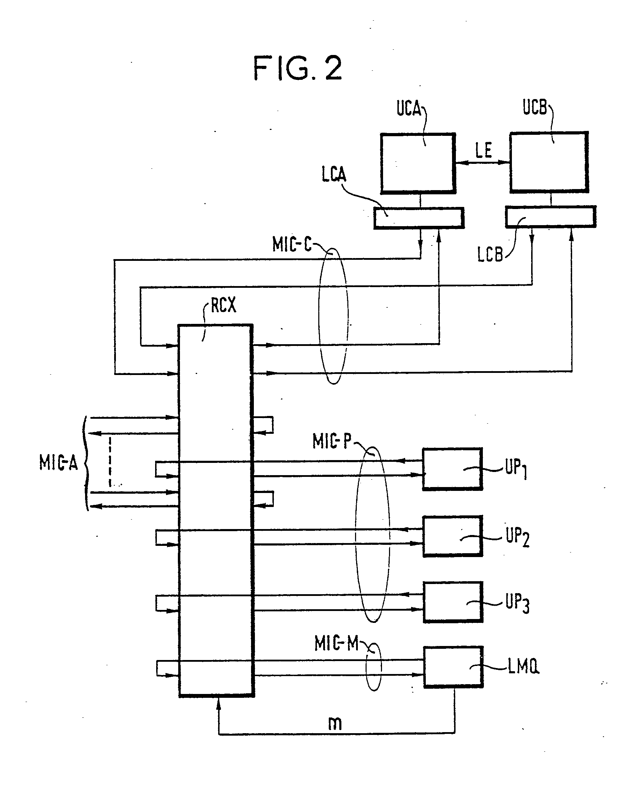

L'application de l'invention à un central du type précédent est représentée sur la figure 2 qui reprend les mêmes éléments avec les mêmes références que la figure 1 mais où les organes UG ont été supprimés. En effet, l'invention permet la suppression de tous les organes de gestion de message entre les unités périphériques UP1 à UP3, LMQ et les calculateurs UCA, UCB. Tous les échanges de messages entre ces unités et les calculateurs sont effectués par des liaisons MIC raccordées au réseau de connexion RCX. Chaque voie d'une liaison MIC comporte 8 éléments binaires qui constituent donc un canal numérique d'échange à 64 Kbits/seconde. Ce débit est suffisant pour supporter les messages entre les calculateurs et un organe émetteur ou récepteur. Dans un central de grande capacité où l'on aurait par exemple 64 organes émetteurs et récepteur, 16 unités de canaux sémaphores et deux unités de marquage, soit au total 82 organes il suffirait de trois liaisons MIC entre les calculateurs UCA, UCB et le réseau de connexion RCX. On en utilisera par exemple 4 pour des raisons de sécurité, ces liaisons MIC sont appelées MIC-C sur la figure 2. Pour chaque organe récepteur ou émetteur, le canal d'échange avec le calculateur sera supporté par l'une des voies de la liaison MIC au réseau de connexion appelée MIC-P sur la figure 2. Une liaison MIC-P de 32 voies comportera donc une voie de gestion du canal, 29 voies de connexion aux liaisons MIC-A, et 2 voies de connexion aux liaisons MIC-C à raison d'une voie vers chaque calculateur.

Il est intéressant de généraliser la solution de raccordement par canal MIC aux unités de marqueurs. Sur la figure 2 on a représenté une logique de marquage LMQ connectée au réseau de connexion RCX par une liaison de commande m. Pour des raisons de souplesse de fonctionnement, il sera intéressant d'avoir une logique LMQ programmée. D'une manière classique, cette logique reçoit un ordre du calculateur UCA, UCB pour chaque changement à établir dans le réseau de connexion RCX, et le déroulement de son programme permet le maintien des connexions déjà établies. Elle traduit chaque ordre global du calculateur UCA, UCB qui concerne l'établissement d'un chemin à travers le réseau de connexion RCX en ordres individuels vers chaque circuit de commande des points de connexion.

Il se pose un problème du fait que la logique de marquage LMQ est commandée à travers le réseau de connexion RCX et c'est elle-même qui commande l'établissement des liaisons à travers ce réseau. La logique pourra donc comporter un programme câblé d'initialisation stocké dans une mémoire morte, pour permettre au moment de la mise en marche d'une logique de marquage, l'établissement de la connexion de sa liaison MIC-M au réseau de connexion, ainsi que les connexions des liaisons MIC-C et éventuellement de certaines liaisons MIC-P.

On va maintenant définir à titre d'exemple les moyens qui peuvent être utilisés pour gérer les canaux d'échanges à 64 Kbits/seconde entre les calculateurs et les unités périphériques ainsi que le format des messages utilisés.

Les messages dans le sens calculateur vers unité périphérique peuvent être des ordres ou des demandes de répétition de message. Les messages dans le sens inverse sont des comptes rendus d'exécution d'ordre, des comptes rendus de fautes, et des comptes rendus d'évènements. Les messages sont mis en file et leur format proposé est représenté au tableau ci-après. Il s'agit d'un message à format variable et allégé de certaines procédures lourdes telles que l'utilisation de codes autocorrecteurs. La

4

# 0 015 524

longueur de chaque partie du message est indiquée en dessous de chaque case par un nombre d'éléments binaires.

L'utilisation de message à format variable est extrêmement souple et permet d'avoir la même procédure pour tous les types d'organes.

| FL | TD | NE | NR | ETQ | R | D | F | | DV | CR |
|----|----|----|----|-----|---|---|---|---|----|----|
| e.b 8 | 6 | 3 | 3 | 6 | 1 | 1 | 1 | | X | 1 |

Les significations des parties du message sont les suivantes:

FL  : drapeau constitué par un profil binaire caractéristique du début du message.
TD  : taille de la partie variable du message réservé aux données.
NE  : numéro du message émis, utilisé pour l'adressage d'une mémoire tampon d'émission.
NR  : numéro du message dont on accuse réception.
ETQ: étiquette permettant au programme du calculateur d'associer un compte rendu d'exécution d'un ordre à l'ordre qui a provoqué ce compte rendu.
R   : résultat de contrôle de parité.
D   : disponibilité de l'organe pour recevoir de nouveaux messages.
F   : indique un compte rendu de fautes.
DV  : donnée variable. Il s'agit du message proprement dit dont la taille est indiquée par le paramètre TD.
CR  : code de redondance indiquant la parité de l'ensemble des octets d'un message non compris le drapeau.

Le principe proposé pour la gestion des canaux d'échanges à 64Kbits/seconde est basé sur la mise en files des messages. Les transferts d'informations entre files de messages et canaux MIC sont gérés par des processeurs de faible puissance par exemple des microprocesseurs du type 8080 de ls Société INTEL comme indiqué à la figure 3. Dans le cas où chaque calculateur central UCA, UCB est relié au réseau de connexion RCX par 4 liaisons MIC-C, la logique de couplage LCA comportera 4 processeurs P1 à P4 affectés chacun à l'une des liaisons MIC. Dans l'unité périphérique, par exemple UP1, un processeur P5 est affecté à la gestion de la liaison MIC-P (ou de MIC-M s'il s'agit de la logique LMQ) à laquelle il est relié par un interface d'accès IA. La partie donnée variable du message est ensuite traitée par un organe de signalisation OS de l'unité périphérique, OS étant par exemple un émetteur ou un récepteur de code décimal ou multifréquence.

Pour l'émission des messages, on utilise par exemple à chaque extrémite d'un canal une mémoire silo d'émission de 16 cases pouvant contenir chacune un message. A cette mémoire silo sera associée une file d'adresses de mémoires silos libres et une file d'adresses de mémoires silos contenant des messages prêts à être émis.

En réception, les messages sont mis en files.

Les mémoires silos et les files sont gérées par le processeur affecté au canal. Pour avoir une adaptation efficace de la programmation aux différents cas de gestion, on utilisera de préférence des processeurs microprogrammés.

L'invention ne concerne pas le type de liaison utilisé entre le calculateur central et la logique de couplage correspondante (LCA ou LCB). Cependant il semble intéressant d'avoir au niveau du calculateur et des logiques de couplage des moyens de dialogue par l'intermédiaire de files regroupant toutes les files gérées par les processeurs P1 à P4. On aura dans ce cas pour chaque unité périphérique de type UP1, UP2 ou UP3, une file d'ordre et une file d'accusé de réception, une file de comptes rendus de fautes et une file d'évènements, et pour chaque unité périphérique de type LMQ une file d'ordre, une file d'accusé d'exécution, et une file de comptes rendus de fautes.

On a indiqué ci-dessus que les unités périphériques ne géraient que des évènements élémentaires et émettaient un message pour chaque évènement. La structure décrite reste valable si l'on introduit dans ces unités un certain prétraitement de la signalisation. Il sera intéressant de le faire par exemple lorsque ce prétraitement sera indépendant de l'environnement de l'autocommutateur. Dans ce cas les programmes de prétraitement des unités périphériques pourront être par exemple stockés en mémoire morte de type ROM ou PROM. Ce prétraitement pourra par exemple concerner la reconnaissance de chiffres en signalisation décimale, au lieu de la simple reconnaissance de front d'impulsions, la distribution des signaux d'asservissement en signalisation multifréquence, ou la reconnaissance de caractères dans des applications à la transmission de données.

Une organisation dans laquelle un niveau plus évolué de traitement de la signalisation serait obtenu en effectuant un traitement préalable de la signalisation dans des processeurs de signalisation PS différents des processeurs centraux, peut être également réalisée avec la structure des canaux d'échanges suivant l'invention. Un exemple d'une organisation de ce type est représenté à la figure 4. Les processeurs de signalisation PS sont reliés par une logique de couplage LCS à un certain nombre de liaisons MIC-S connectées au réseau de connexion. Les liaisons MIC-S sont analogues aux liaisons MIC-C et leur gestion est identique. Suivant l'environnement de l'autocommutateur, on pourra avoir soit seulement deux processeurs PS affectés en partage de charge au traitement de toute la signalisation, ou des processeurs PS spécialisés chacun dans le traitement d'un type de signalisation. Le réseau de connexion RCX permettra la connexion fixe d'une partie des voies de chaque liaison MIC-S aux voies des liaisons MIC-P, les voies restantes étant connectées aux liaisons MIC-C. Les programmes de traitement en mémoire vive des processeurs PS pourront être chargés à partir des calculateurs centraux UCA, UCB via les canaux d'échange MIC. On aboutit ainsi à une structure dans laquelle les liaisons MIC et le réseau de connexion constituant des canaux d'échange entre des calculateurs. En ce qui concerne la signalisation, la structure décrite correspond à une hiérarchie à trois niveaux: les unités périphériques, les processeurs de signalisation, et les calculateurs centraux. Pour l'ensemble de la commande de l'autocommutateur, la structure reste centralisée, les calculateurs centraux effectuant les opérations d'exploitation et de maintenance, d'acheminement des communications et de commandes du réseau de connexion.

L'invention n'est pas limitée à l'application décrite, en particulier elle est applicable à d'autres types d'autocommutateurs, et à d'autres types de canaux MIC, par exemple des canaux comportant des nombres de voies différentes ou des nombres différents d'éléments binaires dans chaque voie.

## Revendications

1. Autocommutateur comportant un réseau de connexion numérique (RCX) qui relie des circuits ou des lignes d'abonnés par l'intermédiaire de canaux numériques de liaisons à multiplexage temporel (MIC), des unités périphériques d'émission et de réception de signalisation (UP) pour lesdits circuits ou lignes d'abonnés, des unités périphériques de marquage (UMQ) du réseau de connexion numérique et au moins un calculateur central de commande pilotant les unités périphériques (UP, UMQ) via une logique de couplage (LCA) dotée d'au moins un processeur et reliée au réseau de connexion par des canaux numériques de liaisons à multiplexage temporel de même que les circuits, les lignes d'abonnés et les unités périphériques, ledit autocommutateur étant caractérisé en ce que les liaisons à multiplexage temporel entre unité périphérique et réseau de connexion et une pluralité de liaisons à multiplexage temporel entre logique de couplage et réseau de connexion sont respectivement reliées chacune à un processeur de gestion de messages (P), le processeur (P5) pour les liaisons entre unité périphérique et réseau de connexion étant dans l'unité périphérique (UP), les processeurs (P1, P4) pour les liaisons entre une logique de couplage et le réseau de connexion étant dans la logique de couplage pour d'une part optimiser la gestion des messages et d'autre part permettre les associations et aiguillages de messages en logique de couplage, qu'au moins une des unités périphériques est pilotée à travers le réseau de connexion numérique et qu'au moins une unité périphérique de signalisation (UP1) est reliée au réseau de connexion (RCX) par une liaison numérique à multiplexage temporel (MIC-P), ladite liaison numérique (MIC-P) comportant d'une part des canaux reliés par le réseau de connexion à des canaux de signalisation des liaisons numériques (MIC-A) affectées auxdits circuits ou auxdites lignes d'abonnés, et comportant d'autre part des canaux reliés par le réseau de connexion à des canaux de la liaison numérique (MIC-C) reliée au calculateur.

2. Autocommutateur selon la revendication 1, dans lequel les messages échangés entre un calculateur central et les unités périphériques sont à format variable, avec une partie fixe et des données variables, caractérisé en ce que chaque processeur de gestion d'une liaison multiplex comporte des moyens de traitement pour la prise en compte et la mise en file des messages et en ce que la logique de couplage comporte de plus des moyens de gestion de l'ensemble des files prises en compte par les processeurs qu'elle comporte.

## Patentansprüche

1. Selbstwählanlage mit einem digitalen Koppelfeld (RCX), das Sprechkreise oder Teilnehmerleitungen über digitale Zeitmultiplex-Verbindungskanäle (MIC) verbindet, mit peripheren Signalsende- und -empfangseinheiten (UP) für die Sprechkreise oder Teilnehmerleitungen, peripheren Markierereinheiten (UMQ) des digitalen Koppelfelds und mindestens einem zentralen Steuerrechner, der die peripheren Einheiten (UP, UMQ) über eine mit mindestens einem Prozessor versehene und an das Koppelfeld über digitale Zeitmultiplex-Verbindungskanäle ebenso wie die Sprechkreise, die Teilnehmerleitungen und die peripheren Einheiten angeschlossene Koppellogik (LCA) steuert, dadurch gekennzeichnet, daß die Zeitmultiplexverbindungen zwischen Periphereinheit und Koppelfeld sowie zahlreiche Zeitmultiplexverbindungen zwischen Koppellogik und Koppelfeld je an einen Nachrichtenverwaltungsprozessor (P) angeschlossen sind, wobei der Prozessor (P5) für die Verbindungen zwischen peripherer Einheit und Koppelfeld in der peripheren Einheit (UP) angeordnet ist, während die Prozessoren (P1, P4) für die Verbindungen zwischen einer Koppellogik und dem Koppelfeld in der Koppellogik sitzen, um einerseits die Nachrichtenverwaltung zu optimieren und andererseits die Zuordnungen und Lenkung der Nachrichten in der Koppellogik zu erlauben, daß mindestens eine der peripheren Einheiten über das digitale Koppelfeld gesteuert wird und daß mindestens eine periphere Signaleinheit (UP1) an das Koppelfeld (RCX) über eine digitale Zeitmultiplexverbindung (MIC-P) angeschlossen ist, die einerseits Kanäle aufweist, die über das Koppelfeld an Signalkanäle der den Sprechkreisen oder den Teilnehmerleitungen zugewiesenen digitalen

**0 015 524**

Verbindungen (MIC-A) angeschlossen sind, und die andererseits Kanäle aufweist, die über das Koppelfeld an Kanäle der digitalen Verbindung (MIC-C) führen, die mit dem Rechner verbunden ist.

2. Selbstwählanlage nach Anspruch 1, in der die zwischen einem zentralen Rechner und den peripheren Einheiten ausgetauschten Nachrichten variables Format besitzen, mit einem festen Teil und variablen Daten, dadurch gekennzeichnet, daß jeder Prozessor zur Verwaltung einer Multiplexverbindung Verarbeitungsmittel für die Berücksichtigung und die Einreihung der Nachrichten in Files besitzt und daß die Koppellogik außerdem Mittel zur Verwaltung aller von ihren Prozessoren berücksichtigten Files aufweist.

**Claims**

1. An automatic exchange device comprising a digital switching network (RCX) for interconnecting the circuits or the subscriber lines through digital time division multiplex connection channels (MIC), peripheral units (UP) for transmitting and receiving signalling informations for said circuits or subscriber lines, peripheral marker units (UMQ) of the digital switching network and at least one central control computer for controlling the peripheral units (UP, UMQ) via a coupling logic (LCA) provided with at least one processor and connected to the switching network through digital time division multiplex connection channels in the same manner as the circuits, the subscriber lines and the peripheral units, characterized in that the time division multiplex connections between a peripheral unit and the switching network and a plurality of time division multiplex connections between a coupling logic and the switching network are each connected respectively to a message supervising processor (P), the processor (P5) supervising the connections between a peripheral unit and the switching network being located in a peripheral unit (UP) whereas the processors (P1, P4) supervising the connections between a coupling logic and the switching network are located in the coupling logic in order to optimize the message supervision and to permit the associations and branchings of messages in a coupling logic, that at least one peripheral signalisation unit (UP1) is connected to the switching network (RCX) via a digital time division multiplex link (MIC-P) which comprises on the one hand channels connected via the switching network to signalisation channels of the digital links (MIC-A) attributed to said circuits or to said subscriber lines, and on the other hand channels connected via the coupling network to digital links (MIC-C) connected to the computer.

2. An automatic exchange according to claim 1, in which the messages exchanged between a central computer and the peripheral units are of variable length and include a fixed part and variable data, characterized in that each processor for supervising a multiplex link comprises processing means for taking the messages in consideration and for arranging them in files and that the coupling logic further comprises means for supervising the set of files taken in consideration by its processors.

7

FIG. 1

# FIG. 2

# FIG. 3

# FIG. 4